# EUROPÄISCHE PATENTSCHRIFT

(11) **EP 2 027 403 B1**
(45) Veröffentlichungstag und Bekanntmachung des Hinweises auf die Patenterteilung: **11.01.2012**
(21) Anmeldenummer: 07722264.4
(22) Anmeldetag: 21.04.2007
(51) Int. Cl.: F16J 15/32, F16J 15/16, F16J 15/56

(54) **DICHTUNGSANORDNUNG ZUR DRUCKENTLASTUNG**
SEAL ASSEMBLY FOR RELIEVING PRESSURE
STRUCTURE D'ÉTANCHÉITE POUR DÉCOMPRESSION

(30) Priorität: 16.05.2006 DE 102006023157
(43) Veröffentlichungstag der Anmeldung: 25.02.2009
(73) Patentinhaber: Trelleborg Sealing Solutions Germany GmbH, 70565 Stuttgart (DE)
(72) Erfinder: JORDAN, Holger, 73765 Neuhausen a.d.F. (DE)
(74) Vertreter: Kohler Schmid Möbus
(86) Internationale Anmeldenummer: PCT/DE2007/000706
(87) Internationale Veröffentlichungsnummer: WO 2007/131468

(56) Entgegenhaltungen:
- DE-A1- 3 603 669
- DE-A1- 19 654 357
- DE-C1- 19 955 149
- FR-A1- 2 617 939
- US-A- 4 681 327
- US-A- 5 275 422
- US-A1- 2002 153 665

## Beschreibung

Die Erfindung betrifft eine Dichtungsanordnung zwischen zwei gegeneinander translatorisch bewegbaren Maschinenteilen zum Abdichten einer Hochdruckseite gegenüber einer Niederdruckseite, bestehend aus einem zähelastischen Dichtungsring und mindestens einem gummielastischen Vorspannelement, wobei im Dichtungsring eine oder mehrere Entlastungsbohrungen bzw. Entlastungskanäle vorgesehen sind, die einerseits im druckbeaufschlagten Zustand der Dichtungsanordnung der Niederdruckseite zugewandte, niederdruckseitige Öffnungen und andererseits hochdruckseitige Öffnungen aufweisen.

Bei Dichtungsanordnungen zwischen zueinander bewegbaren Maschinenteilen kann im Betriebszustand, d.h. bei einer translatorischen Bewegung der beiden Maschinenteile zueinander, ein Mediendruckaufbau in den Zwischenräumen zwischen den einzelnen Dichtungselementen, wie einer Primär- und einer Sekundärdichtung, auftreten. Verursacht wird dies durch ungünstige Geschwindigkeitsverhältnisse der Maschinenteile, beispielsweise einer , Kolbenstange relativ zum Einbauraum. Ein überhöhter Druck, z.B. auf der Niederdruckseite, kann zu einer Beschädigung der Maschinenteile bis zu ihrem Bersten und zu einem Ausfall der gesamten Dichtungsanordnung führen.

Eine Dichtungsanordnung zur Druckentlastung weist Entlastungsbohrungen bzw. - kanäle auf, die vergleichbar einem Rückschlagventil der Druckentlastung dienen. Eine derartige Dichtungsanordnung ist beispielsweise aus DE 101 17 662 C1 oder US 2002/153665 A1 bekannt geworden. In einer Grunddrucklage, in der die Dichtungsanordnung eine Hochdruckseite gegenüber einer Niederdruckseite abdichtet, sind dort die an einem Dichtungsring vorgesehenen Entlastungsbohrungen bzw. -känale verschlossen und in einer Druckentlastungslage, mit anderen Worten bei invertierter Drucklage, freigegeben, d.h. geöffnet, so dass ein in einem Zwischenraum auf der Niederdruckseite anstehender Druck beim Erreichen eines Überdrucks zur Hochdruckseite hin entweichen kann. Bei den bekannten Dichtungsanordnungen zur Druckentlastung ist nicht in allen Betriebssituationen sichergestellt, dass in der Druckentlastungslage keine direkte Verbindung zwischen Hochdruckseite und Niederdruckseite besteht.

Der Erfindung liegt die Aufgabe zugrunde, Nachteile des Standes der Technik zu vermeiden, wobei insbesondere die Dichtheit in der Druckentlastungslage verbessert werden soll.

Die Aufgabe wird erfindungsgemäß durch eine Dichtungsanordnung zwischen zwei translatorisch bewegbaren Maschinenteilen zum Abdichten einer Hochdruckseite gegenüber einer Niederdruckseite gelöst, bestehend aus einem zäheleastischen Dichtungsring und mindestens einem gummielastischen Vorspannelement, wobei im Dichtungsring eine oder mehrere Entlastungsbohrungen bzw. Entlastungskanäle vorgesehen sind, die einerseits in druckbeaufschlagtem Zustand der Dichtungsanordnung der Niederdruckseite zugewandte, niederdruckseitige Öffnungen und andererseits hochdruckseitige Öffnungen aufweisen, wobei die niederdruckseitige Öffnung bzw. Öffnungen im in einen Nutraum eingebauten Zustand der Dichtungsanordnung durch eine im druckbeaufschlagten Zustand der Niederdruckseite zugeordnete, niederdruckseitige Nutflanke des Nutraums oder durch das mindestens eine Vorspannelement verschlossen oder durch die niederdruckseitige Nutflanke, einem Nutgrund des Nutraum und das Vorspannelement begrenzt sind. Der Dichtungsring liegt im eingebauten, druckfreien Zustand mit einer axial ausgerichteten Kraftkomponente an der niederdruckseitigen Nutflanke an.

Durch die axial, d.h. parallel zur Richtung der translatorischen Bewegung beider Maschinenteile ausgerichtete Kraftkomponente wird der Dichtungsring an die niederdruckseitige Nutflanke gepresst bzw. gedrückt und verhindert somit eine Verbindung zwischen der Niederdruckseite bzw. einem auf der Niederdruckseite an die Dichtungsanordnung sich anschließenden Zwischenraum und der niederdruckseitigen Öffnung der Entlastungsbohrung bzw. des Entlastungskanals. Die Verbindung zwischen dem niederdruckseitigen Zwischenraum und der niederdruckseitigen Öffnung wird erst bei einer entsprechenden Gegenkraft zur axialen Kraftkomponente, also in der Druckentlastungslage, zugelassen.

Erfindungsgemäß liegt das Vorspannelement an der Außenoberfläche und zumindest an einer auf der Hochdruckseite ausgebildeten, hochdruckseitigen Seitenflanke des Dichtungsrings an.

Das Vorspannelement liegt teilweise zwischen der hochdruckseitigen Seitenflanke des Dichtungsrings und der hochdruckseitigen Nutflanke. Durch das axiale Übermaß des Vorspannetements zur Nut bzw. dem Nutraum wird ein axialer Druck auf den Dichtungsring und somit die axiale Kraftkomponente zur Anlage des Dichtungsrings an der niederdruckseitigen Nutflanke erzeugt. Das Vorspannelement ist bevorzugt als Formteil ausgebildet.

Alternativ oder zusätzlich kann bei der erfindungsgemäßen Dichtungsanordnung der Dichtungsring im eingebauten Zustand an der niederdruckseitigen Nutflanke und an einer hochdruckseitigen Nutflanke des Nutraums anliegen.

In dieser Ausführungsform wird die axiale Kraftkomponente durch den Dichtungsring selbst aufgebracht, welcher beidseitig an der niederdruckseitigen und hochdruckseitigen Nutflanke des Nutraums anliegt und in dieser Lage zusammendrückt bzw. -gepresst wird. In axialer Richtung gesehen, weist der Dichtungsring ein Übermaß gegenüber dem Nutraum auf.

In einer bevorzugten Ausführungsform der erfindungsgemäßen Dichtungsanordnung weist der Dichtungsring an seiner dem Nutgrund zugewandten Außenoberfläche eine oder mehrere schräg zum Nutgrund ausgerichtete Teilflächen auf.

Der Vorteil dieser Ausführungsform liegt darin, dass die axiale Kraftkomponente über die geometrische Ausgestaltung der Außenoberfläche des Dichtungsrings erreicht wird. Durch die Anlage des den Dichtungsring spannenden Vorspannelements an einer schrägen Teilfläche des Dichtungsrings wird der Dichtungsring in axialer Richtung zur Niederdruckseite hin gepresst bzw. vorgespannt. Durch geeignete Profile des Dichtungsrings und/oder des Vorspannelements, insbesondere durch die Wahl der Neigung der Anlagefläche zwischen Dichtungsring und Vorspannelement, kann die axiale Kraftkomponente anforderungsabhängig eingestellt, d.h., vergrößert bzw. abgeschwächt werden.

Weiter kann die Dichtungsanordnung durch zwei Vorspannelemente gekennzeichnet sein.

Durch zwei Vorspannelemente, die an dem Dichtungsring bevorzugt an einer parallel und an einer abgeschrägt zum Nutgrund ausgerichteten Teilfläche des Dichtungsrings anliegen, können die die Radialkomponente und die Axialkomponente der durch die Vorspannelemente auf den Dichtungsring übertragenen Kraft über jeweils ein Vorspannelement erzeugt werden. Daraus ergibt sich der Vorteil, dass für die erfindungsgemäße Dichtungsanordnung standardisierte Vorspannelemente, wie O-Ringe, Vierkantringe, Quad-Ringe^{®} (eingetragene Marke der Firma Quadion Corporation, Minneapolis, US) eingesetzt werden können, was insbesondere die Herstellungskosten der Dichtungsanordnung minimiert.

Weiter kann der Dichtungsring an einer niederdruckseitigen Seitenflanke eine zusätzliche Dichtkante aufweisen.

Durch die Ausbildung der zusätzlichen Dichtkante wird das Eindringen von Druckmedium, wie Hydraulikflüssigkeit oder Schmieröl, in einen Teilraum des Nutraums, in den die Entlastungsbohrungen bzw. -kanäle niederdruckseitig münden, verhindert.

Weiter ist das erste Maschinenteil bevorzugt ein Zylinder und das zweite Maschinenteil eine Kolbenstange eines im Zylinder geführten Kolbens.

Die erfindungsgemäße Dichtungsanordnung zur Druckentlastung ist für den Einsatz in einem hydraulischen System besonders geeignet.

Druckfreier Zustand im Sinne der Erfindung ist ein Zustand, in dem die Dichtungsanordnung in einem Nutraum eingebaut ist und das unter Druck stehende Medium noch nicht an der Dichtungsanordnung anliegt. Druckbeaufschlagter Zustand im Sinne der Erfindung ist ein Zustand, in dem die in den Nutraum eingebaute Dichtungsanordnung mit dem unter Druck stehenden Medium beaufschlagt ist.

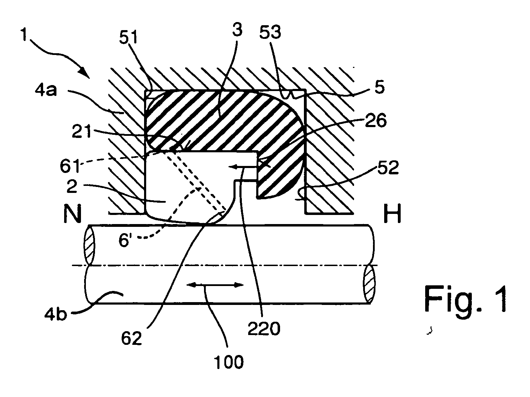

Weitere Vorteile und Merkmale der Erfindung ergeben sich aus der Beschreibung und den Figuren der Zeichnung. Die erfindungsgemäße Dichtungsanordnung ist in Ausführungsbeispielen in den Figuren 1 bis 3 gezeigt. Die in den Figuren gezeigten Merkmale sind rein schematisch und nicht maßstäblich zu verstehen. Es zeigt:
- Fign. 1 bis 3: jeweils eine beispielhafte Dichtungsanordnung zwischen zwei gegeneinander translatorisch bewegbaren Maschinenteilen.

In Fig. 1 ist ein Schnitt durch eine Dichtungsanordnung 1, in der ein Dichtungsring 2 und ein Vorspannelement 3 zwischen einem ersten Maschinenteil 4a und einem zweiten Maschinenteil 4b angeordnet sind, gezeigt. Das zweite Maschinenteil 4b, hier ein Kolben, ist entlang einer Translationsrichtung 100 relativ zum als Zylinder ausgeführten ersten Maschinenteil 4a geführt und in Translationsrichtung 100 beweglich. Die beiden Maschinenteile 4a und 4b umschließen einen im Schnitt kastenförmigen Nutraum 5 mit einer niederdruckseitigen Nutflanke 51, einer gegenüberliegenden hochdruckseitigen Nutflanke 52 und einem Nutgrund 53.

Das den Dichtungsring 2 radial spannende und auf ihn eine Kraft mit einer axialen Kraftkomponente 220 ausübende Vorspannelement 3 ist als Formteil ausgebildet und liegt an der Außenoberfläche 21 und einer der Hochdruckseite H zugewandten, hinteren Seitenflanke 26 des Dichtungsrings 2 an. Durch die Anlage des zwischen beiden Nutflanken 51 und 52 eingespannten Vorspannelements 3 an der hinteren Seitenflanke 26 des Dichtungsrings 2 wird die axiale Kraftkomponente 220 eingestellt und eine Anlage des Dichtungsrings 2 an der niederdruckseitigen Nutflanke 51 sichergestellt. Durch diese Anlage wird eine Verbindung zwischen der Niederdruckseite N bzw. einem dort an die Dichtungsanordnung 1 angrenzenden Zwischenraum und einem in dem Dichtungsring 2 vorgesehenen Entlastungskanal 6' verhindert. Diese Verbindung wird erst bei Aufbringung einer entsprechenden axialen Gegenkraft und einer Ablage der hochdruckseitigen Seitenflanke 22 von der niederdruckseitigen Nutflanke 51 freigegeben. Eine niederdruckseitige Öffnung 61 der Entlastungsbohrung 6 wird im gezeigten eingebauten Zustand sowohl im druckfreien als auch in einer Grunddrucklage durch das Vorspannelement 3 verschlossen und erst bei Erreichen einer Druckentlastungslage durch eine entsprechende Verschiebung und/oder Verformung des Vorspannelements 3 freigegeben. Eine hochdruckseitige Öffnung 62 des Entlastungskanals 6' ist an einer dem zweiten Maschinenteil 4b zugewandten Seitenfläche des Dichtungsrings 2 vorgesehen und in jeder Drucklage offen.

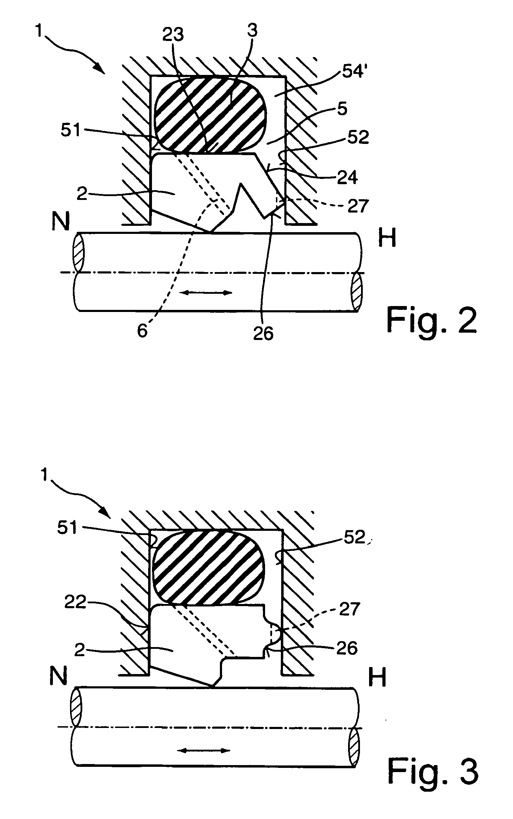

In Fig. 2 ist ein Ausführungsbeispiel der Dichtungsanordnung 1 gezeigt, in dem die zur axialen Anlage benötigte Kraft über den Dichtungsring 2 selbst bzw. über seine Lage im Nutraum 5 aufgebracht wird. Der Dichtungsring 2 liegt an der niederdruckseitigen Nutflanke 51 und an der hochdruckseitigen Nutflanke 52 an, mit anderen Worten er ist zwischen beiden Nutflanken 51 und 52 eingeklemmt. An der hinteren Seitenflanke 26 ist eine Zusatznut 27 vorgesehen, über die Hochdruckseite H mit einem hinter dem Vorspannelement 3 liegenden weiteren Teilraum 54' verbunden ist. Der im Schnitt gezeigte Dichtungsring 2 weist entlang seines Umfangs weitere, bevorzugt gleich beabstandete Zusatznuten auf. Der Dichtungsring 2 weist eine gerade erste Teilfläche 23, an der das Vorspannelement 3 an- bzw. aufliegt, und eine abgeschrägte zweite Teilfläche 24 auf.

In dem in Fig. 3 gezeigten Ausführungsbeispiel der Dichtungsanordnung 1 liegt der Dichtungsring 2 an beiden Nutflanken 51 und 52 an, wobei die hochdruckseitige, hintere Seitenflanke 26 einen Fortsatz aufweist, in dem die Zusatznut 27 vorgesehen ist.

Weitere Ausführungsformen der Erfindung mit einem oder mehreren Vorspannelementen in kastenförmigen, stufenförmigen Einbauräumen, wie Nuträumen, zwischen translatorisch zueinander beweglichen Maschinenteilen, wie einer Kolbenstange bzw. einem Kolben und einem Zylinder, sind denkbar. Es ist darüber hinaus auch vorstellbar, dass die Entlastungsbohrung bzw. der Entlastungskanal in seiner gesamten Länge oder zumindest teilweise im den Nutraum aufweisenden Maschinenteil, insbesondere in den Nutflanken und dem Nutgrund, vorgesehen ist.

In einer Dichtungsanordnung 1 zum Abdichten einer Hochdruckseite H gegenüber einer Niederdruckseite N mit mindestens einer Entlastungsbohrung bzw. einem Entlastungskanal 6 zur Druckentlastung sind ein Dichtungsring 2 und mindestens ein Vorspannelement 3 derart in einem Nutraum 5 zwischen zwei translatorisch gegeneinander bewegbaren Maschinenteilen 4a, 4b angeordnet, dass das Vorspannelement 3 den Dichtungsring 2 sowohl mit einer radialen Kraftkomponente 210 als auch einer axialen Kraftkomponente 220 spannt und der Dichtungsring 2 über definierte Anlagenflächen 20, 22 an dem zweiten Maschinenteil 4b und der niederdruckseitigen Nutflanke 51 anliegt.

## Patentansprüche

1. Abdichtung zwischen zwei gegeneinander translatorisch bewegbaren Maschinenteilen (4a, 4b), umfassend eine Dichtungsanordnung (1) und einen ersten und einen zweiten Maschinenteil (4a, 4b), zwischen denen die Dichtungsanordnung (1) zum Abdichten einer Hochdruckseite (H) gegenüber einer Niederdruckseite (N), angeordnet ist, wobei die Dichtungsanordnung (1) aus einem zähelastischen Dichtungsring (2) und mindestens einem gummielastischen Vorspannelement (3), besteht, wobei im Dichtungsring (2) eine oder mehrere Entlastungsbohrungen (6) bzw. Entlastungskanäle (6') vorgesehen sind, die einerseits im druckbeaufschlagten Zustand der Dichtungsanordnung (1) der Niederdruckseite (N) zugewandte, niederdruckseitige Öffnungen (61) und andererseits hochdruckseitige Öffnungen (62) aufweisen, wobei die niederdruckseitige Öffnung bzw. Öffnungen (61) im in einen Nutraum (5) in einem der Maschinenteile (4a, 4b) eingebauten Zustand der Dichtungsanordnung (1) durch eine im druckbeaufschlagten Zustand der Niederdruckseite (N) zugeordnete, niederdruckseitige Nutflanke (51) des Nutraums (5) oder durch das mindestens eine Vorspannelement (3) verschlossen, oder durch die niederdruckseitige Nutflanke (51), einen Nutgrund (53) des Nutraums (5) und das Vorspannelement (3) begrenzt, sind, und der Dichtungsring (2) im eingebauten, druckfreien Zustand mit einer axial ausgerichteten Kraftkomponente (220) an der niederdruckseitigen Nutflanke (51) anliegt, wodurch der Dichtungsring (2) an die Nutflanke (51) gepresst wird und eine Verbindung zwischen der Niederdruckseite und den niederdruckseitigen Öffnungen (61) verhindert wird, **dadurch gekennzeichnet, dass** das Vorspannelement (3) an einer dem Nutgrund (53) zugewandten Außenoberfläche (21) des Dichtungsrings (2) und zumindest an einer auf der Hochdruckseite (H) ausgebildeten, hochdruckseitigen Seitenflanke (26) des Dichtungsrings (2) anliegt und/oder wobei der Dichtungsring (2) im eingebauten Zustand an der niederdruckseitigen Nutflanke (51) und einer hochdruckseitigen Nutflanke (52) des Nutraums (5) anliegt, so dass eine Öffnung der Entlastungsbohrungen (6) bzw. der Entlastungskanäle ausschließlich in einer Druckentlastungslage erfolgt und eine Verbindung zwischen der Niederdruckseite und den niederdruckseitigen Öffnungen (61) bei einer Gegenkraft zur axial ausgerichteten Kraftkomponente (22) in der Druckentlastungslage erfolgt.

2. Abdichtung nach Anspruch 1,
**dadurch gekennzeichnet, dass**
der Dichtungsring (2) an seiner dem Nutgrund (53) zugewandten Außenoberfläche (21) eine oder mehrere schräg zum Nutgrund (53) ausgerichtete Teilflächen (23, 24) aufweist.

3. Abdichtung nach einem der vorhergehenden Ansprüche,
**dadurch gekennzeichnet, dass**
zwei Vorspannelemente (3, 3') vorgesehen sind.

4. Abdichtung nach einem der vorhergehenden Ansprüche,
**dadurch gekennzeichnet, dass**
der Dichtungsring (2) an einer niederdruckseitigen Seitenflanke (22) eine zusätzliche Dichtkante (25) aufweist.

5. Abdichtung nach einem der vorhergehenden Ansprüche,
**dadurch gekennzeichnet, dass**
das erste Maschinenteil (4a) ein Zylinder und das zweite Maschinenteil (4b) eine Kolbenstange eines im Zylinder geführten Kolbens ist.

## Claims

1. Seal between two machine parts (4a, 4b) that can be moved in a translatory fashion with respect to each other, comprising a sealing arrangement (1) and a first and a second machine part (4a, 4b) between which the sealing arrangement (1) is arranged for sealing a high-pressure side (H) with respect to a low-pressure side (N), the sealing arrangement (1) consisting of a viscoplastic sealing ring (2) and at least one rubber-elastic pretensioning element (3), wherein the sealing ring (2) comprises one or several relief bores (6) or relief channels (.6') having openings (61) on the low-pressure side facing the low-pressure side (N) in the pressurized state of the sealing arrangement (1), and also openings (62) on the high-pressure side, wherein the opening(s) (61) on the low-pressure side is/are closed when the sealing arrangement (1) is installed in a groove space (5) in one of the machine parts (4a, 4b) by a low-pressure side groove flank (51) of the groove space (5) associated with the low-pressure side (N) in the pressurized state, or by the at least one pretensioning element (3), or are delimited by the groove flank (51) on the low-pressure side, a groove bottom (53) of the groove space (5) and the pretensioning element (3), and the sealing ring (2) abuts the groove flank (51) on the low-pressure side in the installed pressure-free state with an axially oriented force component (220), whereby the sealing ring (2) is pressed to the groove flank (51) and prevents connection between the low-pressure side and the openings (61) on the low-pressure side, **characterized in that** the pretensioning element (3) abuts an outer surface (21) of the sealing ring (2) facing the groove bottom (53) and abuts at least one side flank (26) of the sealing ring (2) on the high-pressure side formed on the high-pressure side (H) and/or wherein, in the installed state, the sealing ring (2) abuts the low-pressure side groove flank (51) and a high-pressure side groove flank (52) of the groove space (5) such that the relief bores (6) or relief channels are opened exclusively in a pressure relief position and a connection is established between the low-pressure side and the low-pressure side openings (61) under a counter force to the axially oriented force component (220) in the pressure relief position.

2. Seal according to claim 1, **characterized in that**, on its outer surface (21) facing the groove bottom (53), the sealing ring (2) has one or several partial surface(s) (23, 24) that is/are oriented at an inclination with respect to the groove bottom (53).

3. Seal according to any one of the preceding claims, **characterized in that** two pretensioning elements (3, 3') are provided.

4. Seal according to any one of the preceding claims, **characterized in that** the sealing ring (2) has an additional sealing edge (25) on a side flank (22) on the low-pressure side.

5. Seal according to any one of the preceding claims, **characterized in that** the first machine part (4a) is a cylinder and the second machine part (4b) is a piston rod of a piston that is guided in the cylinder.

## Revendications

1. Structure d'étanchéité entre deux parties de machine (4a, 4b) pouvant être animées de mouvements translatoires l'une vis-à-vis de l'autre, comprenant un dispositif d'étanchement (1) et des première et seconde parties de machine (4a, 4b) entre lesquelles ledit dispositif d'étanchement (1) est interposé en vue d'assurer l'étanchéité d'un côté haute pression (H) par rapport à un côté basse pression (N), ledit dispositif d'étanchement (1) étant constitué d'une bague viscoplastique d'étanchement (2) et d'au moins un élément de précontrainte (3) doué de l'élasticité du caoutchouc, ladite bague d'étanchement (2) étant intérieurement pourvue d'un ou plusieurs alésage(s) de détente (6) ou canal (canaux) de détente (6') qui comportent d'une part, à l'état de pressurisation du dispositif d'étanchement (1), des orifices (61) situés côté basse pression et pointant vers le côté basse pression (N) et, d'autre part, des orifices (62) situés côté haute pression, sachant que, lorsque ledit dispositif d'étanchement (1) est à l'état intégré dans une rainure (5) pratiquée dans l'une des parties de machine (4a, 4b), l'orifice ou les orifices (61) situé(s) côté basse pression est (sont) respectivement occulté(s) par un flanc (51) de ladite rainure (5) situé côté basse pression et associé audit côté basse pression (N) à l'état de pressurisation, ou par l'élément de précontrainte (3) à présence minimale, voire par ledit flanc (51) situé côté basse pression, par un fond (53) de ladite rainure (5) et par ledit élément de précontrainte (3), et sachant qu'à l'état intégré exempt de pression, la bague d'étanchement (2) est en applique contre ledit flanc (51) de la rainure, situé côté basse pression, avec une composante de force (220) orientée axialement, ce qui a pour effets de presser ladite bague d'étanchement (2) contre ledit flanc (51) de la rainure, et d'empêcher une communication entre le côté basse pression et les orifices (61) situés côté basse pression, **caractérisée par le fait que** l'élément de précontrainte (3) est en applique contre une surface extérieure (21) de la bague d'étanchement (2) qui est tournée vers le fond (53) de la rainure, et au moins contre une zone latérale (26) de ladite bague d'étanchement (2) qui est située côté haute pression et est ménagée du côté haute pression (H) ; et/ou ladite bague d'étanchement (2) est en applique, à l'état intégré, contre le flanc (51) de la rainure situé côté basse pression et contre un flanc (52) de ladite rainure (5) situé côté haute pression, de sorte qu'une ouverture respective des alésages de détente (6), ou des canaux de détente, s'opère exclusivement dans une position de détente de pression, et qu'une communication entre le côté basse pression et les orifices (61) situés côté basse pression est instaurée, dans ladite position de détente de pression, en présence d'une force agissant en opposition à la composante de force (220) orientée axialement.

2. Structure d'étanchéité selon la revendication 1,
**caractérisée par le fait que**
la bague d'étanchement (2) présente, sur sa surface extérieure (21) tournée vers le fond (53) de la rainure, une ou plusieurs surface(s) partielle(s) (23, 24) orientée(s) à l'oblique en direction dudit fond (53) de la rainure.

3. Structure d'étanchéité selon l'une des revendications précédentes,
**caractérisée par le fait que**
deux éléments de précontrainte (3, 3') sont prévus.

4. Structure d'étanchéité selon l'une des revendications précédentes,
**caractérisée par le fait que**
la bague d'étanchement (2) est pourvue d'une arête additionnelle d'étanchement (25) dans une zone latérale (22) située côté basse pression.

5. Structure d'étanchéité selon l'une des revendications précédentes,
**caractérisée par le fait que**
la première partie de machine (4a) est un cylindre, et la seconde partie de machine (4b) est une tige d'un piston guidé dans ledit cylindre.
